# EUROPEAN PATENT SPECIFICATION

(11) **EP 1 214 250 B1**
(45) Date of publication and mention of the grant of the patent: **05.11.2003**
(21) Application number: 00929957.9
(22) Date of filing: 18.05.2000
(51) Int. Cl.: B65D 5/43, B65D 85/57, G11B 23/03

(54) **TAMPER-RESISTANT BOX FOR VIDEOCASSETTE, COMPACT DISC OR SIMILAR, AND BLANK FOR THE BOX**
KARTON MIT ORIGINALITÄTSVORRICHTUNG FÜR VIDEOKASSETTEN, COMPACT DISC UND DESGLEICHEN, UND KARTONAUSSCHNITT
BOITE INVIOLABLE POUR CASSETTE VIDEO, COMPACT DISC OU ANALOGUE, ET FLAN POUR CETTE BOITE

(30) Priority: 03.06.1999 NO 992686
(43) Date of publication of application: 19.06.2002
(73) Proprietor: Smartbox AS, 1352 Kolsas (NO)
(72) Inventor: MOEN, Öyvind, N-4790 Lillesand (NO); BERG, Finn, N-4790 Lillesand (NO); ANDERSEN, Tor, N-1349 Rykkin (NO)
(74) Representative: Hano, Christian, Dipl.-Ing.
(86) International application number: NO0000160
(87) International publication number: WO00075024

(56) References cited:
- US-A- 4 434 896

## Description

The present invention relates to a box for a video cassette, compact disc (CD) or similar , and a blank for the box, according respectively to the preamble of the claims 1 and 6. Such box and blank for the base are known from the document US 4 434 896 A.

The previously known boxes for video cassettes, CDs or similar normally consist of two parts connected in a hinge-like manner, so that the box parts can be pivoted away or towards one another when, for example, the video cassette is to be removed from or placed in the box. Such boxes are provided with information about the respective video cassette, CD or similar, and buyers may arrange them in a rack, for example, according to a preferred system.

To buyers it is important that the box provides a packaging which protects and, at the same time, provides information on the product inside the box. For distributors of e.g. non-played video cassettes it is important that the box is also provided with a seal, which indicates whether buyers have opened the boxes after buying them. The seal additionally protects against dust etc. A drawback of known boxes is that they are supplied ready-made, in their final form, so that the space required during transport and storage is undesirably increased. Moreover, the boxes are disproportionately labour-intensive, due to, among other things, said hinging, and they are thereby expensive to produce. Further, the sealing, which is normally in the form of a wrapping of shrink plastic, and which is applied for example in a heat tunnel or by cellophanizing, is a complicated process. This increases the production costs further.

Through the present invention, there is provided a box for a video cassette, compact disc (CD) or similar, and a blank for the box, whereby the above-mentioned defects and disadvantages are essentially remedied. This has been realised by means of the features appearing from the characterizing part of the independent Claims 1 and 6.

Thereby provision is made for the box, and for that matter also the blank for the box, among other things to be stored in a flat extent, so that these will be less space-demanding during transport and storage, and that the box or the blank comprises a sealing means, so that the previous sealing with wrapping of the box becomes unnecessary, and that the boxes are far easier to produce, so that the total production cost will be much smaller. Other favourable features of the invention appear from the present dependent Claims, and otherwise from the description.

In the following part of the description and with reference to the appended drawings, a preferred non-limiting embodiment of the present invention will be explained in further detail,
Fig. 1 showing a schematic view of a flat sheet-like blank for the formation of a box with a sealing means provided at two adjacent end walls of the blank;

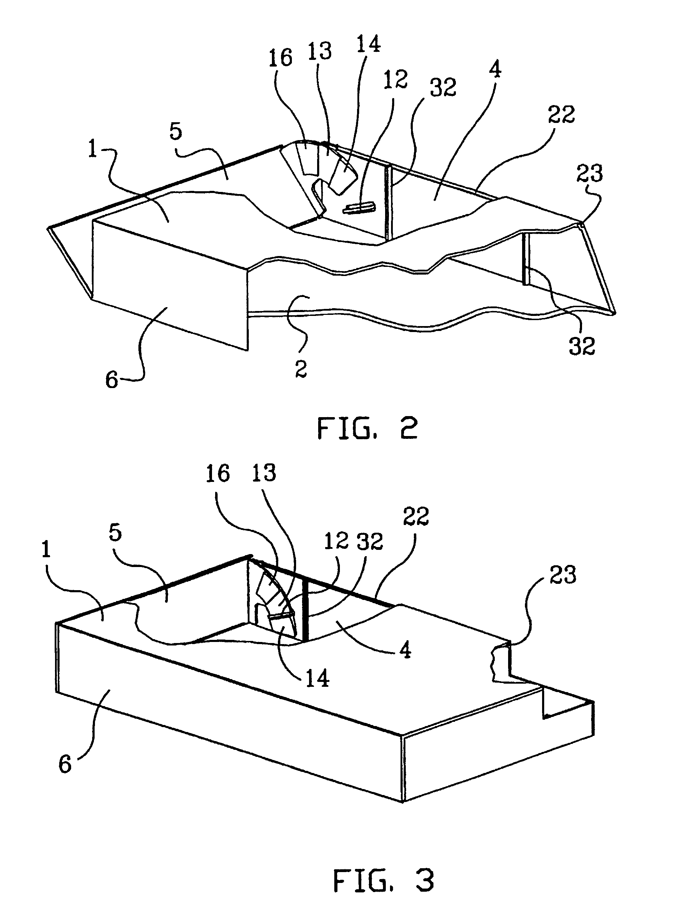

Fig. 2 showing a schematic perspective view of the box during completion, wherein portions have been left out in order better to show the sealing means before it has been put together into a sealing position;
Fig. 3 showing a schematic perspective view of the completed box with portions left out in order better to show the connected sealing means;

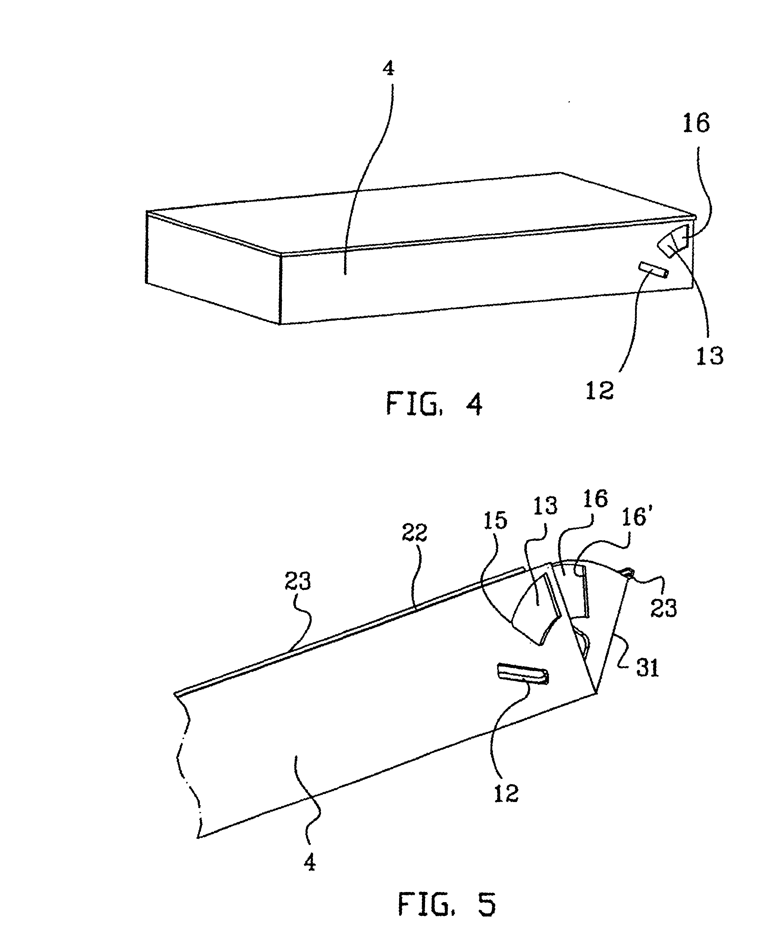

Fig. 4 showing a schematic perspective view of the completed box viewed towards a longitudinal terminal edge at the sealing means; and
Fig. 5 showing a detailed section of the box viewed towards the end walls with the sealing means, as this is being brought together.

The sheet-formed blank 1, which is used in the forming of the box, comprises two side walls 1, 2, end walls 3-6 positioned between the side walls 1, 2 in the complete box, and associated folding lines 7-11 provided therefor. The end walls 3-6 are positioned so in the blank, that one end wall 3 extends between two of the folding lines 7, 8 coinciding with the opposite longitudinal edges of the side walls 1, 2, one terminal edge 4 extends at the folding line 9 coinciding with a longitudinal edge of one of the side walls 2 opposite the longitudinal edges mentioned above, and the remaining end walls 5, 6 extend at respective folding lines 10, 11 coinciding with transversal edges of the side wall 2 last mentioned. Additionally, the blank comprises a sealing means 12, 13 arranged so that it shows whether the box has been opened after completion, and which is positioned at two adjacent end walls 4, 5.

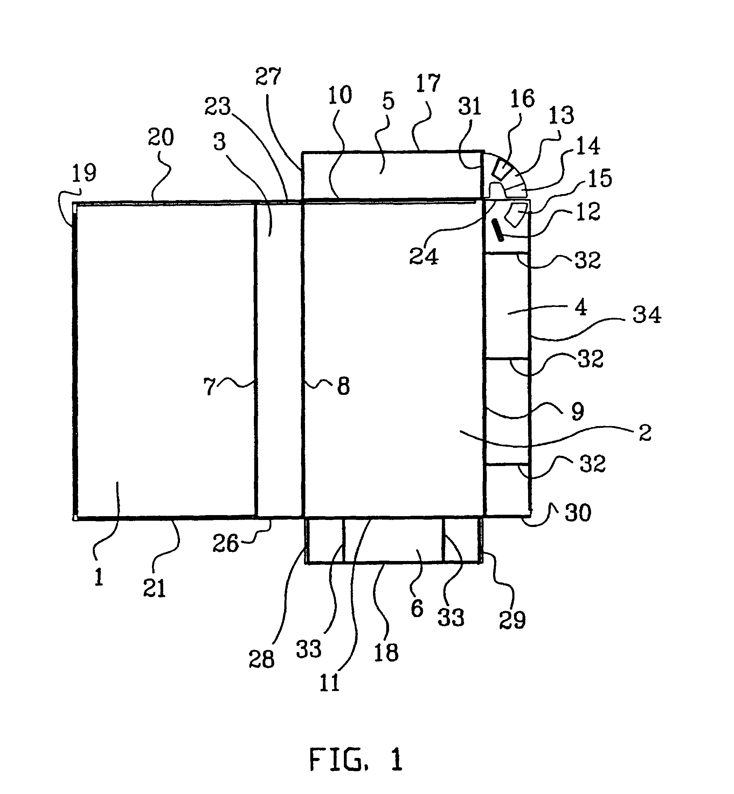

The sealing means comprises a bow-like element 12 and a locking element 13 arranged thereto, each formed in a respective end wall 4, 5. The bow element 12 is provided in a portion near a transversal edge 24 of the end wall 4, adjacent the end wall 5, and in the flat condition of the blank, the locking element 13 extends as shown in Fig. 1, rounded towards the end wall 4 in the extension of the end wall 5. The locking element 13 can be bent upwards towards the end wall 5 at a folding line 31 formed therein. At a free end facing the bow element 12, the locking element 13 has a wedge-shaped portion 14 adapted to bear in a locking manner against the bow element 12 in the completed, unopened box. The wedge portion 14 is inserted into the bow element 12 when the box is being folded, after which a rear edge of the wedge portion 14 will prevent extraction of the locking element 13 from the bow element 12. Thereby the box can only be opened in that the bow element 12 is broken, so that, as mentioned, it shows if the buyer has opened the box after having bought it. This is done in the way that a coin, for example, is forced into an opening 15 against a reinforcing portion 16 of the locking element 13. Alternatively, an edge surface 16' can be influenced with a coin, and the end wall 5 thereby be forced towards an open position by breaking the bow element 12. The opening 15 is formed in the end wall 4, between the bow element 12 and a transversal edge 24 of the end wall 4 , and the reinforcing portion 16 is formed between the wedge portion 14 and an adjacent folding edge 31 of the end wall 5.

To make it possible for the box to be held together after having been folded along the folding lines 7-11, the blank is formed, at the respective ones of the free longitudinal edges 34, 18 of the end walls 4, 6, and the free transversal edges 20, 21 and the free longitudinal edge 19 of the side wall 1, and at the respective ones of the free transversal edges 25-30 of the end walls 3-6, with closing means 22, 23, for example resembling a snap-lock. The respective closing means 22, 23 are inserted one into the other after the folding, to hold the box together. After breaking the bow element 12, access is gained to the content of the box by repeated upward and downward pivoting of, for example, the side wall 1 or the end wall 5 of the box, so that the box is opened or closed. Otherwise, at least the end walls 4, 6 are reinforced by a number of transversal ribs 32, 33 or similar.

In the above is stated that the bow element 12 is broken through the insertion of for example a coin through the opening 15, and by subsequently influencing the edge surface 16'. Of course, it is possible for the bow element 12 to be broken by, the coin instead being forced directly into an opening possibly formed in association with the bow element 12. Alternatively the locking element 13 may be formed with a rupture line at the opening 15, so that the locking element 13 breaks and the bow element 12 remains unbroken. The bow element 12 may, for example, be secured directly to the internal face of the end wall 4, or it may remain as a bow element in an opening formed in the end wall 4.

It will be appreciated that the sealing means may be formed in a different manner from that shown in the figures. One of several possible alternatives is to glue a portion of the so-called locking element to the end wall 4. The sealing may then possibly be broken along a rupture line at the folding line 31 or in the locking element itself. Further, the closing means 22, 23 may have a configuration different from that shown. The blank is preferably in plastic, but any other suitable material may be used. The blank will be well suited for use in automated packaging of video cassettes etc.

## Claims

1. A box for a video cassette, compact disc (CD) or a similar object, formed of a sheet-like blank and comprising two opposing side walls (1, 2) and intermediate end walls (3-6), interconnected through folding lines (7-11), a first end wall (3) positioned between first and second folding lines (7, 8) each defining a longitudinal edge of each of said two opposing side walls (1, 2), interconnecting the side walls (1, 2) and having the same extent as the longitudinal edges of the side walls (1, 2), wherein a second end wall (4) extends at a third folding line (9) positioned to coincide with a longitudinal edge of one (2) of the side walls (1, 2) opposite the aforementioned longitudinal edges, and the remaining end walls (5, 6) extend at fourth and fifth folding lines (10, 11) positioned to coincide with transversal edges of one (2) of the side walls (1, 2) having a longitudinal edge coinciding with said third folding line (9), **characterized in that** said box has a distinct opening end and a closure (12,13) assigned thereto, said closure comprising two co-operating closure members (12, 13) positioned at two adjacent end walls (4, 5) at said distinct opening end of the box and adapted to engage each other in order to keep said end opening closed until it is forced open, at least one (12) of said closure members (12, 13) being adapted to get torn and useless for a subsequent closing operation upon being subjected to tension caused by the opening end being forced open.

2. A box according to claim 1, **characterized in that** the closure comprises a bow-like element (12) disposed on one end wall (4) at the opening end of the box and a locking element (13) assigned thereto and disposed on an adjacent end wall (5), the bow-like element (12) being dimensioned to get torn through the tensile force exerted thereon by the locking element (13) when moved as a result of the end opening of the box being forced open.

3. A box according to claim 2, **characterized in that** the bow-like element (12) is positioned in a region near a transversal edge (24) of the end wall (4), adjacent the end wall (5), and the locking element (13) in an extension of the end wall (5) adjacent the end wall (4).

4. A box according to any one of the preceding claims 2 and 3, **characterized in that** at one end adjacent the bow-like element (12), the locking element. (13) is formed with a wedge-like portion (14) adapted to rest in a locking manner against the bow-like element (12), the closure means being opened **in that** the bow-like element (12) is being torn.

5. A box according to any one of the preceding claims, **characterized in that** the respective ones of the free longitudinal edges (17, 18, 34) of the end walls (5, 6, 4), and the free transversal edges (20, 21) and the free longitudinal edge (19) of the side wall (1), and the respective ones of the free transversal edges (25-30) of the end walls (3-6) are formed with closing means (22, 23).

6. A sheet-like blank for a box for a video cassette, a compact disc (CD) or a similar object, comprising two juxtaposed side walls (1, 2) and intermediate end walls (3-6), wherein the blank comprises the side walls (1, 2), end walls (3-6) and folding lines (7-11) provided therefor, the end walls (3-6) being positioned so that one end wall (3) extends between two of the folding lines (7, 8) formed to coincide with the longitudinal edges, facing one another, of the side walls (1, 2), one end wall (4) extends at the folding line (9) formed to coincide with a longitudinal edge of one of the side walls (2) opposite the aforementioned longitudinal edges, and the remaining end walls (5, 6) extend at respective folding lines (10, 11) formed to coincide with transversal edges of the side wall (2) last mentioned, **characterized in that** the blank comprises a closure means (12,13) comprising two co-operating members (12, 13) positioned on two adjacent end walls (4, 5) and, in the erected position of the box to be formed by the blank, adapted to engage one another to keep an openable box end closed, until it is forced open, at least one (12) of said closure members (12) being adapted to get torn and useless for a subsequent closing operation upon being subjected to tension caused by the box end being forced open.

7. A blank according to claim 6, **characterized in that** the closure means comprises a bow-like element (12) and a locking element (13) arranged thereto, formed in respective end walls (4, 5).

8. A blank according to claim 7, **characterized in that** the bow-like element (12) is positioned in a region near a transversal edge (24) of the end wall (4), adjacent the end wall (5), and the locking element (13) in an extension of the end wall (5) adjacent the end wall (4).

9. A blank according to any one of claims 7-8, **characterized in that** at an end adjacent the bow-like element (12), the locking element (13) is formed with a wedge-shaped portion (14) adapted to bear in a locking manner against the bow-like element (12), the closure means being opened by breaking the bow-like element (12).

10. A blank according to any one of claims 6-9, **characterized in that** the respective ones of the free longitudinal edges (17, 18, 34) of the end walls (5, 6, 4) and the free transversal edges (20, 21) and the free longitudinal edge (19) of the side wall (1), and the respective ones of the free transversal edges (25-30) of the end walls (3-6) are formed with closing means (22, 23) .

## Patentansprüche

1. Behälter für eine Videokassette, eine Kompaktdisk (CD) oder einen ähnlichen Gegenstand, der aus einem flächenförmigen Zuschnitt formiert ist und zwei gegenüberliegende Seitenwände (1, 2) und Zwischenstirnwände (3 bis 6) aufweist, die durch Falzlinien (7 bis 11) miteinander verbunden sind,
- wobei eine erste Stirnwand (3) zwischen einer ersten und einer zweiten Falzlinie (7, 8) angeordnet ist, von denen jede einen Längsrand jeder der beiden gegenüberliegenden Seitenwände (1, 2) bildet, die Seitenwände (1, 2) miteinander verbindet und die gleiche Erstreckung wie die Längsränder der Seitenwände (1, 2) hat,
- wobei sich eine zweite Stirnwand (4) an einer dritten Falzlinie (9) erstreckt, die so angeordnet ist, dass sie mit einem Längsrand von einer (2) der Seitenwände (1, 2) gegenüber den erwähnten Längsrändern zusammenfällt, und
- wobei sich die restlichen Stirnwände (5, 6) an einer vierten und einer fünften Falzlinie (10, 11) erstrecken, die so angeordnet sind, dass sie mit Querrändern von einer (2) der Seitenwände (1, 2) zusammenfallen, die einen Längsrand hat, der mit der dritten Falzlinie (9) zusammenfällt,
**dadurch gekennzeichnet,**
- **dass** der Behälter ein gesondertes Öffnungsende und einen diesem zugeordneten Verschluss (12, 13) aufweist,
- wobei der Verschluss zwei zusammenwirkende Verschlusselemente (12, 13) hat, die an zwei benachbarten Stirnwänden (4, 5) an dem gesonderten Öffnungsende des Behälters angeordnet und für den Eingriff miteinander angepasst sind, um diese Endöffnung geschlossen zu halten, bis sie zwangsweise geöffnet wird, und
- wobei wenigstens eines (12) der Verschlusselemente (12, 13) so ausgelegt ist, dass es zerrissen und für einen nachfolgenden Schließvorgang unbrauchbar wird, nachdem es einer Spannung unterworfen worden ist, die dadurch verursacht wird, dass das Öffnungsende zwangsweise geöffnet wird.

2. Behälter nach Anspruch 1, **dadurch gekennzeichnet, dass** der Verschluss ein bügelförmiges Element (12), das an einer Stirnwand (4) des Öffnungsendes des Behälters angeordnet ist, und ein diesem zugeordnetes Verriegelungselement (13) aufweist, das an einer benachbarten Stirnwand (5) angeordnet ist, wobei das bügelförmige Element (12) so bemessen ist, dass es durch die Zugkraft zerrissen wird, die darauf durch das Verriegelungselement (13) ausgeübt wird, wenn es als Folge davon bewegt wird, dass die Endöffnung des Behälters zwangsweise geöffnet wird.

3. Behälter nach Anspruch 2, **dadurch gekennzeichnet, dass** das bügelförmige Element (12) in einem Bereich nahe an einem Querrand (24) der Stirnwand (4) angrenzend an die Stirnwand (5) und das Verriegelungselement (13) an einem Fortsatz der Stirnwand (5) angrenzend an die Stirnwand (4) angeordnet ist.

4. Behälter nach einem der vorhergehenden Ansprüche 2 und 3, **dadurch gekennzeichnet, dass** an einem Ende angrenzend an das bügelförmige Element (12) das Verriegelungselement (13) mit einem keilförmigen Abschnitt (14) ausgebildet ist, der so angepasst ist, dass er verriegelnd an dem bügelförmigen Element (12) anliegt, wobei die Verschlusseinrichtung dadurch geöffnet wird, dass das bügelförmige Element (12) zerrissen wird.

5. Behälter nach einem der vorhergehenden Ansprüche, **dadurch gekennzeichnet, dass** einer der freien Längsränder (17, 18, 34) der Stirnwände (5, 6, 4) beziehungsweise der freien Querränder (20, 21) beziehungsweise der freie Längsrand (19) der Seitenwand (1) und einer der freien Querränder (25 bis 30) der Stirnwände (3 bis 6) mit Schließeinrichtungen (22, 23) ausgebildet sind.

6. Flächenförmiger Zuschnitt für einen Behälter für eine Videokassette, eine Kompaktdisk (CD) oder einen ähnlichen Gegenstand mit zwei nebeneinander liegenden Seitenwänden (1, 2) und Zwischenstirnwänden (3 bis 6),
- wobei der Zuschnitt die Seitenwände (1, 2), Stirnwände (3 bis 6) und dafür vorgesehene Falzlinien (7 bis 11) aufweist,
- wobei die Stirnwände (3 bis 6) so angeordnet sind, dass sich eine Stirnwand (3) zwischen zwei der Falzlinien (7, 8) erstreckt, die so ausgebildet sind, dass sie mit den einander zugewandten Längsrändern der Seitenwände (1, 2) zusammenfallen,
- wobei sich eine Stirnwand (4) an der Falzlinie (9) erstreckt, die so ausgebildet ist, dass sie mit einem Längsrand einer der Seitenwände (2) zusammenfällt, die den vorerwähnten Längsrändern gegenüberliegt, und
- wobei sich die übrigen Stirnwände (5, 6) an entsprechenden Falzlinien (10, 11) erstrecken, die so ausgebildet sind, dass sie mit Querrändern der zuletzt erwähnten Seitenwand (2) zusammenfallen,
**dadurch gekennzeichnet,**
- **dass** der Zuschnitt eine Verschlusseinrichtung (12, 13) mit zwei zusammenwirkenden Elementen (12, 13) aufweist, die an zwei benachbarten Stirnwänden (4, 5) angeordnet sind und die in der aufgerichteten Position des von dem Zuschnitt auszubildenden Behälters so angepasst sind, dass sie aneinander angreifen, um ein aufmachbares Behälterende geschlossen zu halten, bis es zwangsweise geöffnet wird,
- wobei wenigstens eines (12) der Verschlusselemente (12) so angepasst ist, dass es zerrissen und für einen nachfolgenden Schließvorgang nutzlos wird, nachdem es einer Spannung unterworfen worden ist, die dadurch verursacht wird, dass das Behälterende zwangsweise geöffnet wird.

7. Zuschnitt nach Anspruch 6, **dadurch gekennzeichnet, dass** die Verschlusseinrichtung ein bügelförmiges Element (12) und ein daran angeordnetes Verriegelungselement (13) aufweist, die in den jeweiligen Stirnwänden (4, 5) ausgebildet sind.

8. Zuschnitt nach Anspruch 7, **dadurch gekennzeichnet, dass** das bügelförmige Element (12) in einem Bereich nahe an einem Querrand (24) der Stirnwand (4) angrenzend an die Stirnwand (5) und das Verriegelungselement (13) in einem Fortsatz der Stirnwand (5) angrenzend an die Stirnwand (4) angeordnet ist.

9. Zuschnitt nach einem der Ansprüche 7, 8, **dadurch gekennzeichnet, dass** an einem Ende angrenzend an das bügelförmige Element (12) das Verriegelungselement (13) mit einem keilförmigen Abschnitt (14) versehen ist, der so angepasst ist, dass er gegen das bügelförmige Element (12) drückt, wobei die Verschlusseinrichtung geöffnet wird, indem das bügelförmige Element (12) gebrochen wird.

10. Zuschnitt nach einem der Ansprüche 6 bis 9, **dadurch gekennzeichnet, dass** diejenigen der freien Längsränder (17, 18, 34) der Stirnwände (5, 6, 4) beziehungsweise der freien Querränder (20, 21) und des freien Längsrands (19) der Seitenwand (1) die entsprechenden Ränder der freien Querränder (25 bis 30) der Stirnwände (3 bis 6) mit Schließeinrichtungen (22, 23) ausgebildet sind.

## Revendications

1. Boîte pour cassette vidéo, disque compact (CD) ou objet analogue, formée d'une découpe à plat semblable à une feuille et comprenant deux parois latérales opposées (1, 2) et des parois d'extrémité intermédiaires (3-6), interconnectées par des lignes de pliage (7-11), une première paroi d'extrémité (3) positionnée entre des première et deuxième lignes de pliage (7, 8) définissant chacune un bord longitudinal de chacune desdites parois latérales opposées (1, 2), interconnectant les parois latérales (1, 2) et présentant la même étendue que les bords longitudinaux des parois latérales (1, 2), dans laquelle une deuxième paroi d'extrémité (4) se prolonge au niveau d'une troisième ligne de pliage (9) positionnée de façon à coïncider avec un bord longitudinal d'une (2) des parois latérales (1, 2) opposé auxdits bords longitudinaux, et les parois d'extrémité (5, 6) restantes se prolongent au niveau des quatrième et cinquième lignes de pliage (10, 11) positionnées de façon à coïncider avec des bords transversaux d'une (2) des parois latérales (1, 2) présentant un bord longitudinal qui coïncide avec ladite troisième ligne de pliage (9), ladite boîte étant **caractérisée en ce qu'**elle présente une extrémité d'ouverture distincte et une fermeture (12, 13) qui lui est affectée, ladite fermeture comprenant deux organes de fermeture coopérants (12, 13) positionnés au niveau de deux parois d'extrémité adjacentes (4, 5) au niveau de ladite extrémité d'ouverture distincte de la boîte et conçus pour s'engager mutuellement afin de maintenir ladite ouverture d'extrémité fermée jusqu'à son ouverture forcée, au moins un (12) desdits organes de fermeture (12, 13) étant conçu pour être déchiré et devenir inutilisable lors d'une opération de fermeture ultérieure lorsqu'il est soumis à une tension causée par l'ouverture forcée de l'extrémité d'ouverture.

2. Boîte selon la revendication 1, **caractérisée en ce que** la fermeture comprend un élément semblable à un arc (12) disposé sur une paroi d'extrémité (4) à l'extrémité d'ouverture de la boîte et un élément de verrouillage (13) qui lui est affecté et disposé sur une paroi d'extrémité adjacente (5), l'élément semblable à un arc (12) étant dimensionné pour être déchiré par la force de tension exercée sur lui par l'élément de verrouillage (13) lors de son mouvement suite à l'ouverture forcée de l'ouverture d'extrémité de la boîte.

3. Boîte selon la revendication 2, **caractérisée en ce que** l'élément semblable à un arc (12) est positionné dans une région proche d'un bord transversal (24) de la paroi d'extrémité (4), adjacente à la paroi d'extrémité (5), et l'élément de verrouillage (13) dans un prolongement de la paroi d'extrémité (5) adjacente à la paroi d'extrémité (4).

4. Boîte selon l'une quelconque des revendications 2 et 3, **caractérisée en ce que**, à une extrémité adjacente à l'élément semblable à un arc (12), l'élément de verrouillage (13) est doté d'une portion semblable à un coin (14) conçue pour s'appuyer contre l'élément semblable à un arc (12) en le verrouillant, les moyens de fermeture étant ouverts lorsque l'élément semblable à un arc (12) est déchiré.

5. Boîte selon l'une quelconque des revendications précédentes, **caractérisée en ce que** les bords respectifs parmi les bords longitudinaux libres (17, 18, 34) des parois d'extrémité (5, 6, 4) et les bords transversaux libres (20, 21) et le bord longitudinal libre (19) de la paroi latérale (1), et les bords respectifs parmi les bords transversaux libres (25-30) des parois d'extrémité (3-6) sont dotés de moyens de fermeture (22, 23).

6. Découpe à plat semblable à une feuille pour une boîte pour cassette vidéo, un disque compact (CD) ou un objet similaire, comprenant deux parois latérales juxtaposées (1, 2) et des parois d'extrémité intermédiaires (3-6), dans laquelle la découpe à plat comprend les parois latérales (1, 2), les parois d'extrémité (3-6) et des lignes de pliage (7-11) prévues à leur intention, les parois d'extrémité (3-6) étant positionnées de façon à ce qu'une paroi d'extrémité (3) se prolonge entre deux des lignes de pliage (7, 8) formées pour coïncider avec les bords longitudinaux, en regard l'un de l'autre, des parois latérales (1, 2), une paroi d'extrémité (4) se prolonge au niveau de la ligne de pliage (9) formée pour coïncider avec un bord longitudinal d'une des parois latérales (2) opposé auxdits bords longitudinaux, et les parois d'extrémité (5, 6) restantes se prolongent au niveau de lignes de pliage (10, 11) respectives formées pour coïncider avec des bords transversaux de la paroi latérale (2) mentionné en dernier, **caractérisée en ce que** la découpe à plat comprend des moyens de fermeture (12, 13) comprenant deux organes coopérants (12, 13) positionnés sur deux parois d'extrémité adjacentes (4, 5) et, dans la position assemblée de la boîte à former à l'aide de la découpe à plat, conçus pour s'engager mutuellement afin de maintenir fermée une extrémité de la boîte susceptible d'être ouverte, jusqu'à son ouverture forcée, au moins un (12) desdits organes de fermeture (12) étant conçu pour être déchiré et devenir inutilisable lors d'une opération de fermeture ultérieure lorsqu'il est soumis à une tension causée par l'ouverture forcée de l'extrémité de la boîte.

7. Découpe à plat selon la revendication 6, **caractérisée en ce que** les moyens de fermeture comprennent un élément semblable à un arc (12) et un élément de verrouillage (13) qui lui est associé, formé dans des parois d'extrémité (4, 5) respectives.

8. Découpe à plat selon la revendication 7, **caractérisée en ce que** l'élément semblable à un arc (12) est positionné dans une région proche d'un bord transversal (24) de la paroi d'extrémité (4), adjacente à la paroi d'extrémité (5), et l'élément de verrouillage (13) dans un prolongement de la paroi d'extrémité (5) adjacente à la paroi d'extrémité (4).

9. Découpe à plat selon l'une quelconque des revendications 7 et 8, **caractérisée en ce que**, à une extrémité adjacente à l'élément semblable à un arc (12), l'élément de verrouillage (13) est doté d'une portion semblable à un coin (14) conçue pour s'appuyer contre l'élément semblable à un arc (12) en le verrouillant, les moyens de fermeture étant ouverts lorsque l'élément semblable à un arc (12) est rompu.

10. Découpe à plat selon l'une quelconque des revendications 6 à 9, **caractérisée en ce que** les bords respectifs parmi les bords longitudinaux libres (17, 18, 34) des parois d'extrémité (5, 6, 4) et les bords transversaux libres (20, 21) et le bord longitudinal libre (19) de la paroi latérale (1), et les bords respectifs parmi les bords transversaux libres (25-30) des parois d'extrémité (3-6) sont dotés de moyens de fermeture (22, 23).
